(19) Europäisches Patentamt
European Patent Office
Office européen des brevets

(11) Veröffentlichungsnummer : **0 061 667**
**B1**

(12) # EUROPÄISCHE PATENTSCHRIFT

(45) Veröffentlichungstag der Patentschrift : **28.08.85**

(51) Int. Cl.[4] : **C 09 B 29/42**, C 09 D 11/02

(21) Anmeldenummer : **82102266.2**

(22) Anmeldetag : **19.03.82**

(54) **Farbstoffe und ihre Verwendung zum Färben von Belagmassen, organischen Lösungsmitteln und Mineralölprodukten.**

(30) Priorität : **25.03.81 DE 3111648**

(43) Veröffentlichungstag der Anmeldung : **06.10.82 Patentblatt 82/40**

(45) Bekanntmachung des Hinweises auf die Patenterteilung : **28.08.85 Patentblatt 85/35**

(84) Benannte Vertragsstaaten : **CH DE FR GB IT LI**

(56) Entgegenhaltungen :
**EP-A- 0 018 567**
**FR-A- 2 153 417**
**FR-A- 2 207 213**
**FR-A- 2 281 407**

(73) Patentinhaber : **BASF Aktiengesellschaft**
**Carl-Bosch-Strasse 38**
**D-6700 Ludwigshafen (DE)**

(72) Erfinder : **Loeffler, Hermann**
**Haydnstrasse 23**
**D-6720 Speyer (DE)**

**EP 0 061 667 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Farbstoffe der allgemeinen Formel I

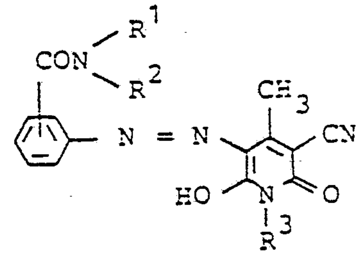

in der $R^1$, $R^2$ und $R^3$ unabhängig voneinander $C_1$-bis $C_{18}$-Alkyl oder -Alkenyl, cyclohexyl, $C_4$- bis $C_9$-Alkoxy- oder Aryloxyalkyl, $C_9$- bis $C_{11}$-Aralkoxyalkyl, $C_7$- bis $C_{11}$-Aralkyl, $C_4$- bis $C_{13}$-Acyloxyalkyl, $C_6$- bis $C_{14}$-Alkoxycarbonyloxyalkyl, $C_6$- bis $C_{12}$-Alkylaminocarbonyloxyalkyl oder $C_4$- bis $C_9$-Dialkylaminoalkyl sind

mit der Maßgabe, daß die Summe der C-Atome der Reste $R^1$ bis $R^3$ 14 bis 36 und die Summe der darin enthaltenen Äther-Sauerstoffe 0 bis 2 beträgt.

Reste $R^1$, $R^2$ und $R^3$ sind im einzelnen beispielsweise:

$CH_3$, $C_2H_5$, $C_3H_7$-(n) und -(i), $CH_2$-$CH$=$CH_2$, $C_4H_9$-(n) und -(i), $C_5H_{11}$-(n) und -(i), $CH_2C(CH_3)_3$, $H_5C_2$-$CH$-$CH_3$, $C(CH_3)_2C_2H_5$, 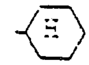, $C_6H_{13}$-(n),

$CH(CH_3)$-$C_3H_7$-(n), $CH(CH_3)$-$CH(CH_3)$-$CH_3$, $CH(CH_3)CH_2CH$=$CH_2$, $CH_2CH(CH_3)C_2H_5$,

$CH_2$-$CH(CH_3)$-$CH(CH_3)$-$CH_3$, $C_2H_4N(C_2H_5)_2$, $C_3H_6N(CH_3)_2$, $CH_2$-$CH(C_2H_5)$-$C_2H_5$,

$CH_2CH(CH_3)C_3H_7$-(n), $C_7H_{15}$-(n), $CH[C_3H_7$-(n)$]_2$, $CH(C_2H_5)C_4H_9$-(n),

$C_8H_{17}$-(n), $CH_2CH(C_2H_5)C_4H_9$-(n), $C_3H_6N(C_2H_5)_2$,

$CH(CH_3)C_3H_6N(C_2H_5)_2$, $CH(CH_3)$-$C_3H_6$-$CH(CH_3)$-$CH_3$, $C_9H_{19}$-(n) und -(i),

$C_{10}H_{21}$-(n) und -(i), $C_{12}H_{25}$-(n), $C_{13}H_{27}$-(n) und -(i), $C_{14}H_{29}$-(n), $C_{15}H_{31}$-(n), $C_{16}H_{33}$-(n), $C_{17}H_{35}$-(n), $C_{18}H_{37}$,

$C_2H_4CH(OCH_3)CH_3$, $C_2H_4OCH_3$, $C_2H_4OC_2H_5$, $C_2H_4OC_3H_7$-(n),

$C_2H_4OC_4H_9$-(n), $C_2H_4OC_6H_5$, $C_2H_4OCH_2C_6H_5$, $C_2H_4OC_2H_4OC_2H_5$, $C_2H_4OC_2H_4OC_4H_9$, $C_3H_6OCOCH_3$, $C_3H_6OCOC_2H_5$, $C_3H_6OCOC_3H_7$-(n), $C_3H_6OCOCH(C_2H_5)C_4H_9$-(n), $C_3H_6OCO_2C_2H_5$, $C_3H_6OCO_2C_4H_9$-(n),

$C_3H_6OCO_2CH(CH_3)C_2H_5$, $C_3H_6OCO_2CH_2CH(C_2H_5)C_4H_9$-(n), $C_3H_6OCON(C_2H_5)_2$, $C_3H_6OCON(CH(CH_3)C_2H_5)_2$, $C_3H_6OC_2H_5$,

$C_3H_6OC_3H_7\text{-(n)}$, $C_3H_6OC_4H_9\text{-(n)}$, $C_3H_6OCH_2\underset{\underset{C_2H_5}{|}}{C}HC_4H_9\text{-(n)}$,
$C_3H_6OC_6H_{13}$, $C_3H_6OCH_2C_6H_5$, $C_3H_6OC_6H_5$, $C_3H_6OC_2H_4OC_4H_9$,
$C_3H_6OC_2H_4OCH_2C_6H_5$, $C_3H_6OC_2H_4OC_6H_5$, $C_3H_6OC_2H_4OC_6H_{11}$,
$\underset{\underset{CH_3}{|}}{C}HCH_2OC_4H_9$, $\underset{\underset{CH_3}{|}}{C}HCH_2OC_6H_5$, $\underset{\underset{CH_3}{|}}{C}HCH_2OCH_2C_6H_5$, $CH_2\underset{\underset{CH_3}{|}}{C}HOC_4H_9$,
$CH_2\underset{\underset{CH_3}{|}}{C}HOC_6H_5$, $CH_2\underset{\underset{CH_3}{|}}{C}HOC_2H_4C_6H_5$, $C_3H_6O\underset{\underset{CH_3}{|}}{C}HCH_2OC_4H_9\text{-(n)}$.

Insbesondere haben die Reste $R^1$, $R^2$ und $R^3$ zusammen 16 bis 28 C-Atome und enthalten zusammen keinen oder nur einen Äther-Sauerstoff. Vorzugsweise trägt weiterhin der Rest

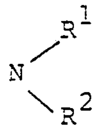

die längerkettigen Reste.

Einzelne bevorzugte Reste $R^1$ und $R^2$ sind z. B. :

$CH_3$, $C_2H_5$, $C_3H_7\text{-(n)}$ und -(i), $C_4H_9\text{-(n)}$ und -(i), $C_5H_{11}\text{-(n)}$ und -(i), $CH_2C(CH_3)_3$, $C(CH_3)_2C_2H_5$, 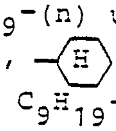 , $CH(C_3H_7)_2$,
$C_6H_{13}$, $C_8H_{17}\text{-(n)}$, $CH_2\underset{\underset{C_2H_5}{|}}{C}H\text{-}C_4H_9\text{-(n)}$, $C_9H_{19}\text{-(i)}$, $C_{10}H_{21}\text{-(i)}$,
$C_{12}H_{25}$, $C_{13}H_{27}\text{-(i)}$, $C_{14}H_{29}\text{-(n)}$, $C_{15}H_{31}\text{-(n)}$,
$C_{16}H_{33}\text{-(n)}$, $C_{17}H_{35}\text{-(n)}$, $C_{18}H_{37}\text{-(n)}$, $C_2H_4OC_4H_9$, $C_2H_4OC_6H_5$,
$C_2H_4OCH_2C_6H_5$, $C_2H_4OC_2H_4OC_4H_9\text{-(n)}$, $C_2H_4OC_2H_4OC_6H_5$,
$C_3H_6OC_4H_9$ und $C_3H_6OC_6H_5$.

Für $R^3$ sind bevorzugt :

$CH_3$, $C_2H_5$, $C_3H_7\text{-(n)}$ und -(i), $C_4H_9\text{-(n)}$ und -(i), 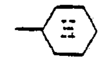 ,
$C_6H_{13}\text{-(n)}$, $CH_2\text{-}\underset{\underset{C_2H_5}{|}}{C}H\text{-}C_4H_9\text{-(n)}$, $C_8H_{17}\text{-(n)}$, $CH(C_2H_5)C_4H_9\text{-(n)}$,
$CH(CH_3)C_2H_4CH(CH_3)_2$, $CH(CH_3)C_3H_6CH(CH_3)_2$, $C_{10}H_{21}\text{-(n)}$,
$C_{13}H_{27}\text{-(n)}$, $C_{18}H_{37}\text{-(n)}$, $C_3H_6OC_2H_5$, $C_3H_6OCH_2\underset{\underset{C_2H_5}{|}}{C}H\text{-}C_4H_9\text{-(n)}$,
$C_3H_6OCH_2C_6H_5$ und $C_3H_6OC_2H_4OC_6H_5$.

Zur Herstellung der Verbindungen der Formel I kann man eine Diazoverbindung von Aminen der Formel

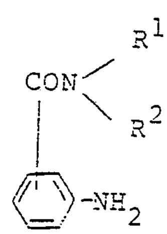

mit Kupplungskomponenten der Formel

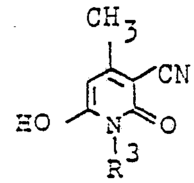

nach an sich bekannten Methoden umsetzen.

Von besonderem Interesse für den angegebenen Verwendungsbereich sind Farbstoffmischungen von Farbstoffen der Formel I, hergestellt durch Vermengung der Einzelinduviduen oder durch Mischkupplung, wobei die Komponentengemische bereits bei deren Synthese durch Verwendung von Alkohol- bzw. Amingemischen erhalten werden können.

Überraschenderweise wurde gefunden, daß die Verbindungen der Formel I außerordentlich hohe Löslichkeiten in den verschiedensten organischen Lösungsmitteln haben und daß sie somit als Farbmittel dafür sowie für Oberflächenbeläge und Mineralölprodukte geeignet sind. Hervorzuheben ist die für metallfreie Verbindungen sehr gute Lichtechtheit in diesen Medien.

Gegenüber vergleichbaren Pyridonfarbstoffen, die aus der FR-A 22 07 213 und der FR-A-21 53 417 bekannt sind, haben die Farbstoffe der Formel I eine bis zum Faktor 10 bis 15 erhöhte Löslichkeit in protisch polaren und aprotischunpolaren organischen Lösungsmitteln, wodurch die Verwendung eines einzelnen Farbstoffes für beide Medien möglich wird.

Darüber hinaus lassen sich die Farbstoffe der Formel I durch Wahl der Reste $R^1$ bis $R^3$ in ihrer Löslichkeit entweder gezielt auf den Hauptanwendungsbereich oder aber für universelle Anwendung, d. h. hohe Löslichkeit in vielen gebräuchlichen Medien, abstimmen.

Als Lösungsmittel kommen insbesondere Toluol, Xylole, Ester, Ketone, Glykole, Glykoläther und Alkohole, im einzelnen beispielsweise Essigsäureäthylester, Essigsäurebutylester, Essigsäuremethoxyäthylester, Aceton, Methyläthylketon, Methylglykol, Methyldiglykol, Butyldiglykol, Äthanol, Propanol, Butanol, Phthalsäurebutylester oder Phthalsäureäthylhexylester in Betracht.

In Druckfarben können die Verbindungen der Formel I die üblicherweise verwendeten Pigmente ersetzen. Hierbei ergeben sich große Vorteile durch den Wegfall der bei Pigmenten notwendigen Finishoperationen und der Dispergierung. Die erzielbaren Echtheiten liegen auf mit den üblichen Pigmenten vergleichbarem Niveau.

Einzelheiten der Herstellung und der Verwendung können den Beispielen entnommen werden, sofern nicht anders vermerkt, auf das Gewicht beziehen.

## Beispiel 1

34,6 Teile p-Aminobenzoesäure-N,N-bis-2'-(äthyl)-hexylamid werden in 85 Raumteilen 36 %iger Salzsäure bei 5-10 °C verrührt und tropfenweise mit 30 Raumteilen einer 3,33 normalen wäßrigen Natriumnitritlösung versetzt. Nach einstündigem Rühren bei 10-15 °C und Überschuß an salpetriger Säure gibt man das Diazotiergemisch auf 500 Teile Wasser und setzt Amidosulfonsäure zu, bis der Überschuß an diazotierendem Agens beseitigt ist.

zur so erhaltenen Diazomischung läßt man die Lösung aus 24 Teilen 1-(n)-Hexyl-2-hydroxy-3-cyan-4-methyl-pyridon-6 in 200 Raumteilen Wasser von 50 °C und 6 Raumteilen 50 %iger Natronlauge zulaufen und rührt bei 25-35 °C nach bis die Diazoniumverbindung verbraucht ist. Der inzwischen durchkristallisierte grüngelbe Farbstoff wird abgesaugt, mit Wasser gewaschen und bei 50 °C i. V. getrocknet.

Der so erhaltene Farbstoff der Formel

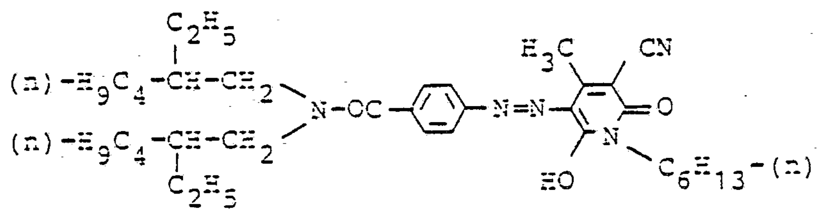

Fp. 82-83 °C (a. Äthanol 80 %)

löst sich hervorragend in organischen Lösungsmitteln wie Äthanol, Äthylacetat, Methyläthylketon, Äthylglykol, Toluol und sogar Testbenzin mit grünstichig gelber Farbe und zeigt in Belagmassen sehr gute Lichtechtheit.

Löst man 0,6 Teile dieses Farbstoffes in einem Gemisch aus 15 Teilen Collodiumwolle, 8 Teilen n-Butanol, 4 Teilen Phthalsäure-äthyl-hexylester, 4 Teilen Phthalsäuredibutylester, 35 Teilen Äthylglykol

und 34 Teilen Toluol und bedruckt mit der erhaltenen Lösung weißes Papier, so erhält man nach dem Trocknen einen grünstichig gelben Druck mit guter Lichtechtheit.

Beispiel 2

34,6 Teile Anthranilsäure-N,N-bis-2-(äthyl)-hexylamid werden in 200 Teilen Toluol gelöst und durch Zugabe von 140 Teilen Eis gekühlt. Dem gut gerührten Gemisch setzt man 30 Raumteile 36 %ige Salzsäure und in Portionen 30 Raumteile einer 3,33-normalen wäßrigen Natriumnitritlösung zu und rührt 30 Minuten bei 5-10 °C nach. Danach wird durch Zugabe von geringen Mengen Amidosulfonsäure die überschüssige salpetrige Säure zerstört. Dann gibt man 24 Teile fein gepulvertes 1-(n)-Hexyl-2-hydroxy-3-cyan-4-methyl-pyridon-6 zu. Nach beendeter Kupplung wird die unten sitzende wäßrige Phase der den gelbgrünen Farbstoff der Formel

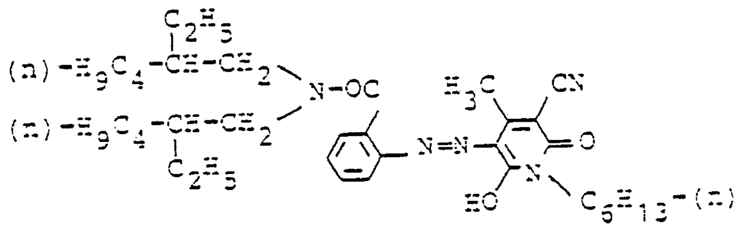

Fp. = 76-78 °C
(a. $CH_3OH$ 90 %)
enthaltenden Toluollösung abgetrennt.

Man befreit die Toluollösung durch mehrfaches Ausrühren mit alkalischem Wasser von gegebenenfalls vorhandener überschüssiger Kupplungskomponente und durch kurze Destillation von Wasserresten. Bei dieser Operation kann die Lösung gleichzeitig auf die gewünschte Konzentration von 300 g Farbstoff/l eingestellt werden.

Beim Vermischen mit 12 000 000 Teilen Heizöl dieses gelb gekennzeichnet.

Beispiel 3

Nach den Angaben des Beispiels 1 werden 34,6 Teile Anthranilsäure-N,N-bis-2-(äthyl)-hexyl-amid auf 21 Teile 1-(n)-Butyl-2-hydroxy-3-cyan-4-methyl-pyridon-6 gekuppelt.

5 Teile des erhaltenen Farbstoffes der Formel

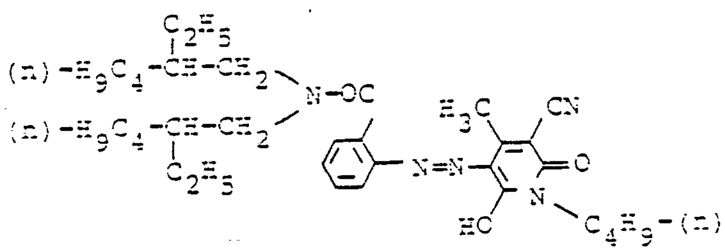

Fp. = 77-78 °C
(aus $CH_3OH$ 90 %)
werden in einem Gemisch aus 10 Teilen eines Styrol-Maleinsäureester-Harzes als Bindemittel, 65 Teilen Äthanol, 10 Teilen Propanol und 10 Teilen Äthylglykol gelöst. Man erhält so eine gelbe Tinte auf Alkohol-Basis für Schreibgeräte.

Die in den folgenden Tabellen durch Angabe der Substituenten bezeichneten Farbstoffe können analog den angegebenen Methoden hergestellt und verwendet werden.

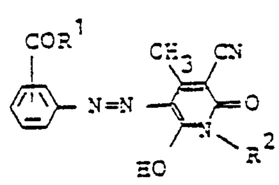

| Bsp. | $R^1$ | $R^2$ | Lösungsfarbe |
|---|---|---|---|
| 4 | 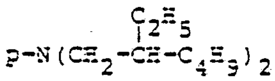 | $C_4H_9$-(n) | grüngelb |
| 5 | 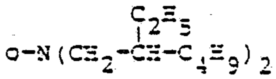 | $C_6H_{13}$ | " |
| 6 | " | $CH_3$ | " |
| 7 | " | 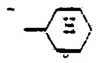 | " |
| 8 | 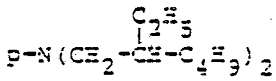 | " | " |
| 9 | " | 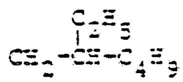 | " |
| 10 | 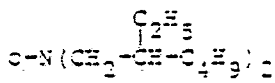 | " | " |
| 11 | p-$N(C_4H_9)_2$ | " | " |
| 12 | o-$N(C_4H_9)_2$ | " | " |
| 13 | " | $C_6H_{13}$-(n) | " |
| 14 | p-$N(C_4H_9)_2$ | " | " |
| 15 | o-$N(C_4H_9)_2$ | $C_{12}H_{25}$-(n) | grüngelb |
| 16 | " | 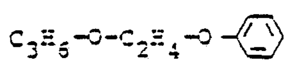 | " |
| 17 | 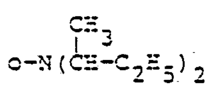 | 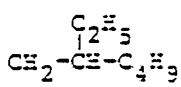 | " |
| 18 | 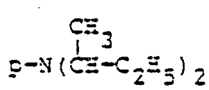 | " | " |
| 19 | 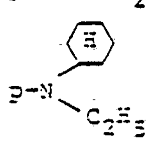 | " | " |
| 20 | 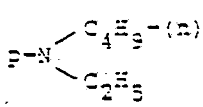 | " | " |

| Bsp. | $R^1$ | $R^2$ | Lösungsfarbe |
|---|---|---|---|
| 21 | 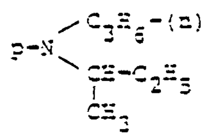 | " | " |
| 22 | 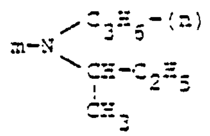 | " | " |

**Patentansprüche**

1. Farbstoffe der allgemeinen Formel I

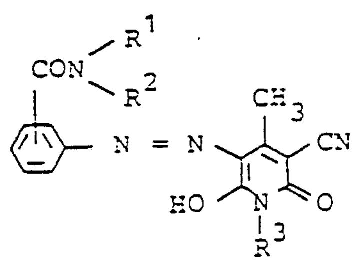

in der $R^1$, $R^2$ und $R^3$ unabhängig voneinander $C_1$- bis $C_{18}$-Alkyl oder -Alkenyl, Cyclohexyl, $C_4$- bis $c_9$-Alkoxy- oder Aryloxyalkyl, $C_9$- bis $C_{11}$-Aralkoxyalkyl, $C_7$- bis $C_{11}$-Aralkyl, $C_4$- bis $C_{13}$-Acyloxyalkyl, $C_6$- bis $C_{14}$-Alkoxycarbonyloxyalkyl, $C_6$- bis $C_{12}$-Alkylaminocarbonyloxyalkyl oder $C_4$- bis $C_9$-Dialkylaminoalkyl sind mit der Maßgabe, daß die Summe der C-Atome der Reste $R^1$ bis $R^3$ 14 bis 36 und die Summe der darin enthaltenen Äther-Sauerstoffe 0 bis 2 beträgt.

2. Farbstoffe gemäß Anspruch 1, dadurch gekennzeichnet, daß die Summe der C-Atome in den Resten $R^1$ bis $R^3$ 16 bis 28 beträgt.

3. Farbstoffe gemäß Anspruch 1, dadurch gekennzeichnet, daß $R^1$ und $R^2$ im Rest der Formel

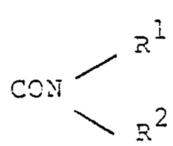

längerkettig als $R^3$ sind.

4. Farbstoffe gemäß Anspruch 1, dadurch gekennzeichnet, daß die Reste $R^1$ bis $R^3$ keinen Äthersauerstoff enthalten.

5. Farbstoffe gemäß Anspruch 1, dadurch gekennzeichnet, daß die Reste $R^1$ und $R^2$ Alkylgruppen mit 4 bis 13, vorzugsweise 4 bis 8 C-Atomen, sind.

6. Farbstoffe gemäß Anspruch 1, dadurch gekennzeichnet, daß der Rest $R^3$ Alkyl mit 1 bis 13 C-Atomen ist.

7. Verwendung der Farbstoffe gemäß den Ansprüchen 1 bis 6 zum Färben von Belagmassen, organischen Lösungsmitteln und Mineralölprodukten.

**Claims**

1. A colorant of the general formula I

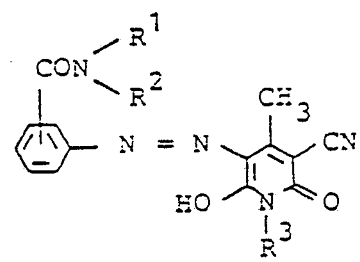

where $R^1$, $R^2$ and $R^3$ independently of one another are $C_1$-$C_{18}$-alkyl, $C_1$-$C_{18}$-alkenyl, cyclohexyl, $C_4$-$C_9$-alkoxyalkyl, $C_4$-$C_9$-aryloxyalkyl, $C_9$-$C_{11}$-aralkoxyalkyl, $C_7$-$C_{11}$-aralkyl, $C_4$-$C_{13}$-acyloxyalkyl, $C_6$-$C_{14}$-alkoxycarbonyloxyalkyl, $C_6$-$C_{12}$-alkylaminocarbonyloxyalkyl or $C_4$-$C_9$-dialkylaminoalkyl, with the proviso that the sum of the carbon atoms of radicals $R^1$, $R^2$ and $R^3$ is from 10 to 36 and the sum of the ether oxygens contained in these radicals is from 0 to 2.

2. A colorant as claimed in claim 1, wherein the sum of the carbon atoms in radicals $R^1$, $R^2$ and $R^3$ is from 16 to 28.

3. A colorant as claimed in claim 1, wherein $R^1$ and $R^2$ in the moiety of the formula

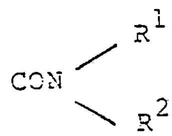

each have a longer chain than $R^3$.

4. A colorant as claimed in claim 1, wherein $R^1$, $R^2$ and $R^3$ do not contain any ether oxygen.

5. A colorant as claimed in claim 1, wherein $R^1$ and $R^2$ are each alkyl of 4 to 13, preferably 4 to 8, carbon atoms.

6. A colorant as claimed in claim 1, wherein $R^3$ is alkyl of 1 to 13 carbon atoms.

7. The use of a colorant as claimed in claims 1 to 6 for coloring coating compositions, organic solvents and mineral oil products.

**Revendications**

1. Colorants de formule générale I

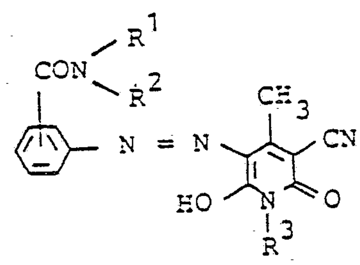

dans laquelle $R^1$, $R^2$ et $R^3$, indépendamment les uns des autres, représentent des radicaux alcoyle ou alcényle en $C_1$ à $C_{18}$, cyclohexyle, alcoxy- ou aryloxy-alcoyle en $C_4$ à $C_9$, aralcoxyalcoyle en $C_9$ à $C_{11}$, aralcoyle en $C_7$ à $C_{11}$, acyloxyalcoyle en $C_4$ à $C_{13}$, alcoxycarbonyloxyalcoyle en $C_6$ à $C_{14}$, alcoylamino-carbonyloxyalcoyle en $C_6$ à $C_{12}$ ou dialcoylaminoalcoyle en $C_4$ à $C_9$, avec cette condition que la somme des atomes de C des radicaux $R^1$ à $R^3$ soit comprise entre 14 et 36 et que la somme des oxygènes oxydiques qui y sont contenus soit comprise entre 0 et 2.

2. Colorants selon la revendication 1, caractérisés en ce que la somme des atomes de C dans les radicaux $R^1$ à $R^3$ est comprise entre 16 et 28.

3. Colorants selon la revendication 1, caractérisés en ce que $R^1$ et $R^2$ dans le radical de formule

sont à chaîne plus longue que $R^3$.

4. Colorants selon la revendication 1, caractérisés en ce que les radicaux $R^1$ à $R^3$ ne contiennent pas d'oxygène oxydique.

5. Colorants selon la revendication 1, caractérisés en ce que les radicaux $R^1$ et $R^2$ sont des groupes alcoyle contenant 4 à 13, de préférence 4 à 8 atomes de C.

6. Colorants selon la revendication 1, caractérisés en ce que le radical $R^3$ est un alcoyle à 1-13 atomes de C.

7. Utilisation des colorants selon l'une quelconque des revendications 1 à 6 pour la coloration de masses de revêtement, de solvants organiques et de produits pétroliers.